# EUROPÄISCHE PATENTSCHRIFT

(11) **EP 0 825 502 B1**
(45) Veröffentlichungstag und Bekanntmachung des Hinweises auf die Patenterteilung: **26.06.2002**
(21) Anmeldenummer: 97113437.4
(22) Anmeldetag: 04.08.1997
(51) Int. Cl.: G05B 19/042, G05B 19/418

(54) **Steuerungssystem**
Control system
Système de commande

(30) Priorität: 13.08.1996 DE 19632608
(43) Veröffentlichungstag der Anmeldung: 25.02.1998
(73) Patentinhaber: Dürr Systems GmbH, 70435 Stuttgart (DE)
(72) Erfinder: Weissinger, Wolfgang, 71691 Freiberg a.N. (DE)
(74) Vertreter: Hoeger, Stellrecht & Partner

(56) Entgegenhaltungen:
- DE-A- 3 534 465
- DE-A- 4 225 834
- LAMB W C ET AL: "CRITERIA FOR SENSOR/ACTUATOR BUS SELECTION" ADVANCES IN INSTRUMENTATION AND CONTROL, Bd. 49, Nr. PART 01, 1.Januar 1994, Seiten 127-136, XP000622533
- STURM L ET AL: "EIN KONZEPT FUER DIE OPTIMALE VERTEILUNG VON STEUERUNGSAUFGABEN IM FELDBEREICH A STRATEGY FOR OPTIMAL PROGRAM ALLOCATION TO CONTROL UNITS AT THE FIELD LEVEL" AUTOMATISIERUNGSTECHNISCHE PRAXIS - ATP, Bd. 34, Nr. 11, 1.November 1992, Seiten 629-636, XP000329117
- LAWRENZ W: ""AUTOBUSSE" FUER DIE SENSOR/AKTOR-VERNETZUNG AM BEISPIEL CAN "AUTOBUSSES" FOR SENSOR/ACTUATOR COMMUNICATION BASED ON CAN-PROTOCOL" AUTOMATISIERUNGSTECHNISCHE PRAXIS - ATP, Bd. 35, Nr. 8, 1.August 1993, Seiten 450, 451-460, XP000393032

## Beschreibung

Die Erfindung betrifft ein Steuerungssystem für eine Fertigungsanlage, umfassend eine Vielzahl von mindestens eine Funktion realisierenden, in der Fertigungsanlage zusammenwirkenden Funktionseinheiten, von denen jede mindestens einen Aktor und mindestens einen Sensor zur Funktionssteuerung und/oder Funktionsüberwachung aufweist.

Bei derartigen Steuerungssystemen wird bislang nach dem Konzept der sogenannten "Zentralen Intelligenz" gearbeitet, gemäß welchem jeder Funktionseinheit eine Einheit zugeordnet ist, die entweder Signale eines Sensors erfaßt und über einen sogenannten Feldbus zur zentralen Anlagensteuerung leitet oder Signale vom Zentralrechner erfaßt und gemäß diesen den Aktor ansteuert.

Dieses Konzept erfordert es, eine Vielzahl von Daten über den Feldbus auszutauschen, so daß allein hieraus eine erhebliche Störanfälligkeit resultiert.

Ein Steuerungssystem für eine Fertigungsanlage mit den Merkmalen des Oberbegriffs von Anspruch 1 ist beispielsweise aus der DE 42 25 834 A1 bekannt. Dieses Steuerungssystem umfaßt eine zentrale Steuereinheit (master) mit von der zentralen Steuereinheit abhängigen Untereinheiten (slaves), welche im Falle eines Masterdefektes lediglich ihnen zugewiesene Notfunktionen ausführen können, um die Anlage in einen gefahrenfreien Zustand zurückzufahren und sichern zu können.

Aus der DE 35 34 465 A1 ist ein Verbundsystem vernetzter Steuereinheiten bekannt, bei dem durch eine Anfangsinitialisierung beim Systemstart bestimmt wird, welche Einheit im Verbundsystem als Zentraleinheit fungiert, wobei zu einem späteren Zeitpunkt ein Wechsel der Zentraleinheit erfolgen kann.

Der Artikel von Sturm et al.: "Ein Konzept für die optimale Verteilung von Steuerungsaufgaben im Feldbereich", Automatisierungstechnische Praxis-ATP, Band 34, Nr. 11, 01. November 1992, Seiten 629 bis 636, beschreibt ein Steuerungssystem, das eine Mehrzahl von speicherprogrammierbaren Steuerungen umfaßt, die über einen Feldbus miteinander verbunden sind.

Der Artikel von Lamb et al.: "Criteria for Sensor/Actuator Bus Selection", Advances in Instrumentation and Control, Band 49, Part 01, 01. Januar 1994, Seiten 127 bis 136, offenbart ein hierarchisches Steuerungssystem, welches eine zentrale Steuereinheit und dieser nachgeordnete verteilte Steuereinheiten umfaßt.

Der Artikel von W. Lawrenz: "'Autobusse' für die Sensor/Aktor-Vernetzung am Beispiel CAN" offenbart ein Steuerungssystem für ein Automobil, bei dem mehrere Steuereinheiten über ein Bussystem miteinander vernetzt sind und eine Multimaster-Buszugriffstechnik angewandt wird.

Der Erfindung liegt die Aufgabe zugrunde, ein Steuerungssystem der gattungsgemäßen Art derart zu verbessern, daß dieses wartungsfreundlich und weniger störanfällig und ist.

Diese Aufgabe wird durch ein Steuerungssystem nach Anspruch 1 gelöst.

Der Vorteil der erfindungsgemäßen Lösung ist darin zu sehen, daß mit dieser nicht mehr jeder Funktionsschritt über den Feldbus im Zentralrechner bearbeitet wird, sondern die dezentralen Steuereinheiten die Möglichkeit eröffnen, die Funktionsschritte in jeder der Funktionseinheit eigenständig zu bearbeiten. Damit wird der Kommunikationsbedarf und somit auch die mit diesem verbundene Störanfälligkeit erheblich reduziert.

Der Modulaufbau der erfindungsgemäßen Steuereinheit hat den großen Vorteil, daß er einerseits sehr wartungsfreundlich ist und außerdem die Möglichkeit schafft, mehrere Leistungsmodule vorzusehen und somit mehrere Aktoren anzusteuern und außerdem mehrere Sensormodule vorzusehen, um mehrere Sensoren einsetzen zu können.

Rein prinzipiell wäre es bei dem erfindungsgemäßen Konzept nach wie vor möglich, bei besonderen, beispielsweise rechnerzeitaufwendigen Funktionen auf einen Zentralrechner über ein Bussystem zurückzugreifen. Dies hat jedoch den Nachteil, daß damit die Programmstruktur eine erhebliche Komplexität erhält.

Aus Gründen einer möglichst wenig aufwendigen Programmstruktur ist es daher besonders vorteilhaft, wenn jede Steuereinheit die gesamten vorgesehenen Funktionen mit dem Funktionssteuerprogramm eigenständig durchführt, das heißt sämtliche für die Funktionen erforderlichen Rechenoperationen selbst durchführt, so daß diesbezüglich jede Steuereinheit autark ist.

Der Vorteil dieser Lösung ist auch darin zu sehen, daß damit die Ausfallanfälligkeit erheblich reduziert wird, da die vorgesehenen Funktionen unabhängig von der Funktionsfähigkeit der Kommunikation der Steuereinheit mit anderen Einheiten durchführbar sind.

Im Extremfall wäre das erfindungsgemäße Konzept so realisierbar, daß das Funktionssteuerprogramm ohne Informationen über die anderen Steuereinheiten der anderen Funktionseinheiten arbeitet. Ein derartiges isoliertes Arbeiten ist jedoch bei komplexen Fertigungsanlagen nicht realisierbar.

Aus diesem Grund ist es erforderlich, eine Kommunikation zwischen den einzelnen Steuereinheiten vorzusehen. Dies wird erfindungsgemäß dadurch realisiert, daß die Steuereinheit einer Funktionseinheit direkt mit der Steuereinheit mindestens einer anderen der Funktionseinheiten kommuniziert. Das heißt, daß durch direkte Kommunikation der jeweiligen Steuereinheit mit der Steuereinheit mindestens einer anderen der Funktionseinheiten ein Informationsaustausch möglich ist, so daß trotz der eigenständigen Funktionsweise in jeder Steuereinheit Informationen von anderen Funktionseinheiten berücksichtigt werden können und folglich die Möglichkeit besteht, dieselben komplexen Steuerungsvorgänge durchzuführen, wie im Fall des aus dem Stand der Technik bekannten Konzepts der "zentralen Intelligenz".

Bei der erfindungsgemäßen Lösung ist beispielsweise vorgesehen, daß jede Steuereinheit alle für die Funktionen der Funktionseinheit notwendigen Funktionsparameter erfaßt und entsprechend diesen die Funktionseinheit steuert. Das heißt, daß die Steuereinheit als Eingangsgrößen lediglich Funktionsparameter erfaßt und damit in der Lage ist, selbständig sämtliche Steuerungsfunktionen abzuleiten. Diese Lösung hat den großen Vorteil, daß dadurch jede Steuereinheit als Eingabegrößen lediglich noch die Funktionsparameter benötigt, um in vollem Umfang die Funktionssteuerung durchführen zu können.

Aus diesem Grund ist vorgesehen, daß die Steuereinheit zumindest in einem Teil der Funktionsparameter durch Auswerten der Signale des mindestens einen Sensors umfaßt. Im einfachsten Fall eines erfindungsgemäßen Steuerungssystems könnte es auch ausreichend sein, sämtliche Funktionsparameter durch Auswerten der Signale der dieser Steuereinheit zugeordneten Sensoren zu ermitteln.

Wie bereits ausgeführt ist es jedoch bei komplexen Anlagen erforderlich, Informationen und damit Funktionsparameter von anderen Steuereinheiten zu erhalten, so daß in diesem Fall die Steuereinheit erfindungsgemäß einen Teil der Funktionsparameter durch Kommunikation mit mindestens einer der anderen Steuereinheiten der Fertigungsanlage erfaßt.

Im Falle einer vorgesehenen Kommunikation zwischen den einzelnen dezentralen Steuereinheiten ist es besonders vorteilhaft, wenn alle Steuereinheiten der Fertigungsanlage an ein Bussystem angeschlossen sind und daher über das Bussystem miteinander kommunizieren können.

Ein derartiges Bussystem kann beispielsweise ein LON-Bus, ein INTERBUS oder ein PROFIBUS sein.

Aus Gründen der Einfachheit der Kommunikation und der Flexibilität des Aufbaus des erfindungsgemäßen Steuerungssystems ist vorzugsweise vorgesehen, daß jede Steuereinheit in der Lage ist, über das Bussystem Kommunikationssignale zu empfangen und auszusenden, so daß selbst dann, wenn im einen oder anderen Fall keinerlei Kommunikation prinzipiell nötig wäre, dies gegebenenfalls noch zu ändern.

Prinzipiell wäre es ausreichend, die Steuereinheiten so auszubilden, daß in diesen das Funktionssteuerprogramm implementiert werden kann, beispielsweise durch Einsetzen eines entsprechenden Programmspeichers oder durch einen entsprechenden Programmieranschluß.

Im Fall, daß die Steuereinheit ohnehin über ein Bussystem kommunizieren, ist es besonders vorteilhaft, wenn jede Steuereinheit über das Bussystem programmierbar ist, da das Bussystem eine besonders einfache und vorteilhafte Möglichkeit bietet, jede Steuereinheit zu erreichen und somit über eine mit dem Bussystem verbundene Programmierstation jede Steuereinheit zu programmieren, beispielsweise dadurch, daß von der Programmierstation ein mittels dieser erstelltes Funktionssteuerprogramm über das Bussystem in die jeweilige Steuereinheit geladen wird.

Ferner sieht eine vorteilhafte Variante des erfindungsgemäßen Konzepts vor, daß die Arbeitsweise jeder Steuereinheit über das Bussystem überprüfbar ist, so daß über das Bussystem die Möglichkeit besteht, sowohl Störungen der Hardware als auch der Software zu erkennen.

Dies läßt sich im einfachsten Fall dadurch realisieren, daß jede Steuereinheit über das Bussystem Fehlermeldungen abgibt, beispielsweise wenn bei laufendem Funktionssteuerprogramm ein Programmfehler oder ein Hardwarefehler auftritt.

Im Zusammenhang mit der bisherigen Beschreibung der erfindungsgemäßen Fertigungsanlage wurde nicht näher spezifiziert, wie die Steuereinheit lokal angeordnet ist.

Beispielsweise wäre es möglich, alle Steuereinheiten - so wie bisher der Fall - in einer Schaltschrankanlage zusammenzufassen, welche lokal völlig separat von der Fertigungsanlage angeordnet ist.

Besonders vorteilhaft ist es jedoch, wenn die Steuereinheiten jeder Funktionseinheit lokal zugeordnet sind, so daß dadurch das Erfordernis entfällt, eine Vielzahl von Leitungen von der Schaltschrankanlage zu den einzelnen Funktionseinheiten zu führen, um deren Aktoren und Sensoren mit der Schaltschrankanlage zu verbinden.

Noch vorteilhafter ist ein Ausführungsbeispiel, bei welchem der mindestens eine Aktor und der mindestens eine Sensor jeder Steuereinheit mit der Funktionseinheit direkt verdrahtet sind, so daß die Möglichkeit besteht, die Funktionseinheit zusammen mit der Steuereinheit zu fertigen und auch bei der Fertigung eine direkte Verdrahtung der beiden miteinander vorzunehmen.

Nach Aufbau der Fertigungsanlage ist es somit lediglich noch erforderlich, die Steuereinheit mit den jeweiligen Zuleitungen zu verbinden.

Eine besonders vorteilhafte Lösung sieht dabei vor, daß jede Steuereinheit an der jeweiligen Funktionseinheit unmittelbar angeordnet, das heißt mit deren Gestell oder Rahmen verbunden ist und somit bei der Fertigung der Funktionseinheit unmittelbar die Steuereinheit montiert und verdrahtet werden kann.

Im Fall einer lokalen Zuordnung der Steuereinheit zur Funktionseinheit ist vorteilhafterweise vorgesehen, daß das Bussystem zu jeder lokal einer Funktionseinheit zugeordneten Steuereinheit geführt ist.

Ein besonders vorteilhaftes Ausführungsbeispiel sieht vor, daß jede Steuereinheit einen zentralrechnerunabhängig und funktionsprogrammgesteuert arbeitenden intelligenten Prozessormodul aufweist.

Um eine Verbindung zwischen dem Bussystem und dem Prozessormodul herzustellen, ist vorzugsweise vorgesehen, daß der Prozessormodul eine Sende- und Empfangseinheit aufweist, welche eine Verbindung zwischen einer Prozessoreinheit des Prozessormoduls und dem Bussystem herstellt.

Um - insbesondere bei einer lokal der Funktionseinheit zugeordneten Steuereinheit - für Wartungspersonal Informationen unmittelbar zur Verfügung zu stellen, ist vorgesehen, daß jede Steuereinheit einen eine Funktionsanzeige betreibenden Anzeigemodul aufweist.

Mit diesem Anzeigemodul ist es beispielsweise möglich, alle Arten von Betriebszuständen anzuzeigen. Besonders vorteilhaft ist es jedoch, wenn dieser Anzeigemodul dazu eingesetzt wird, über die Funktionsanzeige eine Fehleranzeige zu machen.

Um ferner, insbesondere im Notfallbetrieb, direkt auf die jeweilige Steuereinheit zugreifen und diese im Notfallbetrieb betreiben zu können, ist vorzugsweise vorgesehen, daß jede Steuereinheit einen eine Eingabeeinheit betreibenden Ein-/Ausgabemodul umfaßt. Damit besteht beispielsweise die Möglichkeit, über einen manuell betätigbares Terminal einzusetzen, um die Steuereinheit funktionsfähig zu halten.

Insbesondere wenn die jeweilige Steuereinheit mit anderen Steuereinheiten kommuniziert, um über diese für das eigene Funtionssteuerprogramm erforderliche Funktionsparameter zu erfassen, ist es besonders vorteilhaft, wenn mit der Eingabeeinheit im Normalbetrieb von anderen Steuereinheiten für die jeweilige Steuereinheit erzeugte Kommunikationssignale, beispielsweise Funktionsparameter enthaltende Kommunikationssignale, generierbar sind. Damit ist die Möglichkeit geschaffen, mit der erfindungsgemäßen Steuereinheit - beispielsweise obwohl das Bussystem ausgefallen ist - die entsprechende Funktionseinheit betreiben zu können.

Alternativ oder ergänzend hierzu ist es ebenfalls vorgesehen, daß über die Eingabeeinheit ein Störfallbetriebsmodus der Steuereinheit aktivierbar ist, in welchem der Leistungsmodul derselben direkt ansteuerbar ist, das heißt, daß in diesem Fall keine Steuerung mehr über das Funktionssteuerprogramm mehr erfolgt, sondern eine direkte Ansteuerung des Leistungsmoduls über die Eingabeeinheit.

Eine derartige Steuerung eines Leistungsmoduls direkt über die Eingabeeinheit ist dann sinnvoll möglich, wenn erkennbar ist, welche Signale oder Parameter von den Sensoren erfaßt werden.

Aus diesem Grund sieht eine besonders vorteilhafte Lösung vor, daß die vom Sensor erfaßten Funktionsparameter von der Eingabeeinheit anzeigbar sind.

Im Zusammenhang mit der bisherigen Beschreibung des erfindungsgemäßen Steuerungssystems wurde nicht im einzelnen darauf eingegangen, wie die Anlage in die einzelnen Funktionseinheiten unterteilt ist.

So sieht ein besonders vorteilhaftes Ausführungsbeispiel vor, daß jede Funktionseinheit einen eigenen Funktionsabschnitt der Anlage bildet und somit die Funktionseinheiten entsprechend den einzelnen Teilfunktionen der Anlage konzipiert sind.

Vorzugsweise ist die erfindungsgemäße Anlage so aufgebaut, daß diese eine Eingangseinheit und eine Ausgangseinheit für zu bearbeitendes Gut aufweist und daß das Gut die zwischen der Eingangseinheit und der Ausgangseinheit angeordneten Funktionseinheiten durchläuft.

Auch jede Funktionseinheit kann zweckmäßigerweise so ausgebildet sein, daß sie einen Einlaß zum Übernehmen des Guts und einen Auslaß zum Übergeben des Guts aufweist. In diesem Fall läßt sich der Durchlauf des Guts durch die jeweilige Funktionseinheit besonders einfach mit Sensoren erfassen.

Eine besonders günstige funktionelle Struktur der erfindungsgemäßen Anlage sieht vor, daß jede zwischen der Eingangseinheit und der Ausgangseinheit angeordnete Funktionseinheit das Gut von der vorangehenden Funktionseinheit übernimmt und nach Realisierung der eigenen Funktion an die nachfolgende Funktionseinheit abgibt.

Darüber hinaus wird die eingangs genannte Aufgabe auch durch ein Steuerungsverfahren zum Steuern einer Fertigungsanlage nach Anspruch 20 gelöst.

Der Vorteil dieser erfindungsgemäßen Lösung ist ebenfalls darin zu sehen, daß damit die Notwendigkeit einer Kommunikation erheblich verringert wird und somit auch die Störanfälligkeit eines derartigen Steuerungsverfahrens erheblich reduziert wird.

Besonders zweckmäßig ist es dabei, wenn von jeder Steuereinheit die gesamten vorgesehenen Funktionen eigenständig gesteuert werden.

Ein besonders zweckmäßiges erfindungsgemäßes Steuerungsverfahren sieht vor, daß die jeweilige Steuereinheit direkt mit der Steuereinheit mindestens einer anderen der Funktionseinheiten kommuniziert, für den Fall, daß es erforderlich ist, Informationen über Funktionen der anderen Steuereinheiten zu erhalten und verarbeiten zu können, was insbesondere für das Betreiben komplexer Anlagen erforderlich ist.

Eine besonders günstige Variante des erfindungsgemäßen Verfahrens sieht vor, daß von jeder Steuereinheit alle für die Funktion der Funktionseinheit notwendigen Funktionsparameter erfaßt werden und entsprechend diesen die Funktionseinheit gesteuert wird. Damit ist es für jede Steuereinheit lediglich erforderlich, noch Funktionsparameter zu erfassen und die Steuereinheit ist in der Lage, alle übrigen für die Steuerung der Funktionen erforderlichen Rechenoperationen selbst durchzuführen.

Die Funktionsparameter werden zumindest zu einem Teil durch Auswerten der Signale des mindestens einen Sensors der Steuereinheit erfaßt, so daß hierzu keinerlei Kommunikation erforderlich ist.

Wie bereits erwähnt ist es jedoch bei komplexen Anlagen erforderlich, Informationen, insbesondere Funktionsparametern von anderen Steuereinheiten zu erhalten. Aus diesem Grund ist vorgesehen, daß von der Steuereinheit ein Teil der Funktionsparameter durch direkte Kommunikation mit mindestens einer anderen der Steuereinheiten der Anlage erfaßt wird.

Die Kommunikation zwischen den Steuereinheiten erfolgt vorzugsweise so, daß von allen Steuereinheiten Informationen an ein Bussystem abgegeben oder von einem Bussystem empfangen werden.

Ein besonders einfacher Zugriff ist auf die einzelnen Steuereinheiten dann möglich, wenn jede Steuereinheit über das Bussystem programmiert werden kann, so daß das Bussystem nicht nur zur Übermittlung von Kommunikationen, sondern auch zur Übermittlung von Programminformationen für die einzelnen Steuereinheiten vorteilhafterweise eingesetzt werden kann.

Darüber hinaus läßt sich das Bussystem weiterhin noch vorteilhaft einsetzen, wenn die Arbeitsweise jeder Steuereinheit über das Bussystem überprüft werden kann.

Dies läßt sich im einfachsten Fall dadurch realisieren, daß von jeder Steuereinheit über das Bussystem Fehlermeldungen abgegeben werden.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine schematische ausschnittsweise Darstellung eines ersten Ausführungsbeispiels einer Anlage mit einem erfindungsgemäßen Steuerungssystem;
- Fig. 2: eine schematische Darstellung ähnlich Fig. 1 eines zweiten Ausführungsbeispiels einer Anlage mit einem erfindungsgemäßen Steuerungssystem;
- Fig. 3: eine schematische Darstellung der erfindungsgemäßen dezentralen Steuerungssystem mit der Verbindung zwischen den Steuereinheiten untereinander und mit den notwendigen Versorgungen;
- Fig. 4: eine schematische Darstellung einzelner Module einer erfindungsgemäßen Steuereinheit;
- Fig. 5: eine schematische Darstellung der wichtigsten Komponenten des Basismoduls;
- Fig. 6: eine schematische Darstellung der wichtigsten Komponenten des Leistungsmoduls;
- Fig. 7: eine schematische Darstellung der wichtigsten Komponenten des Sensormoduls und
- Fig. 8: eine schematische Darstellung der wichtigsten Komponenten des Prozessormoduls.

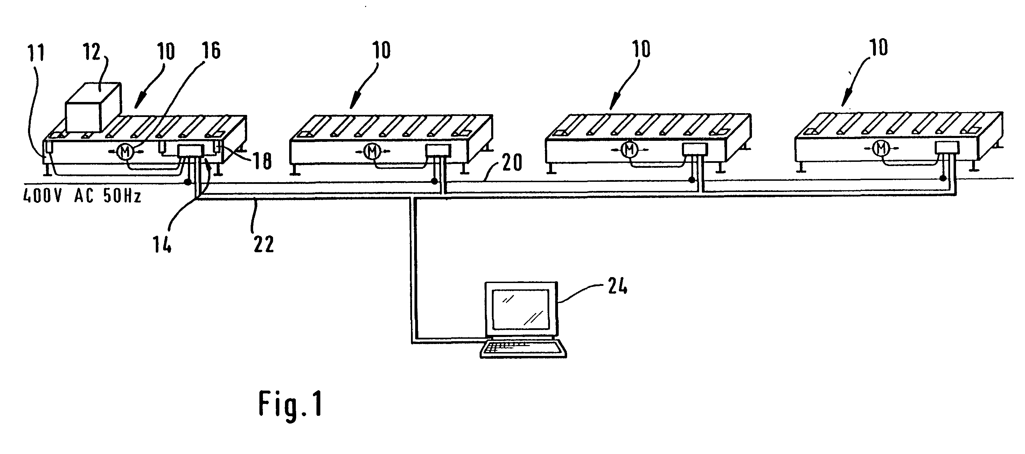

Ein Ausführungsbeispiel einer Fertigungsanlage mit einem erfindungsgemäßen Steuerungssystem, exemplarisch dargestellt in Fig. 1, umfaßt eine Vielzahl von Funktionseinheiten 10, in diesem Fall Rollenbahneinheiten, welche als selbständige Module aufgebaut sind und in der Fertigungsanlage, beispielsweise aufeinanderfolgend angeordnet sind und zusammenwirken, um in diesem Fall beispielsweise ein Transportgut 12, wie zum Beispiel ein Werkstück, entsprechend der Fertigungsfolge zu fördern.

An jeder dieser Funktionseinheiten 10 ist unmittelbar an einem Gestell 11 derselben eine Steuereinheit 14 angeordnet, welche dazu dient, einerseits einen als Aktor 16 dienenden und in diesem Fall die Rollen antreibenden Aktor M anzusteuern, wobei die Ansteuerung des Aktors 16 über Signale von Sensoren 18 erfolgt, welche beispielsweise als Funktionsparameter die Position des Guts 12 längs der Fertigungsanlage ermitteln, so daß ein Transport des Gutes 12 längs der einzelnen Funktionseinheiten 10 entsprechend der tatsächlichen Position des Guts 12 und der vom Fertigungsablauf her geforderten Position des Guts 12 erfolgen kann.

Jede der Steuereinheiten 14 ist mit einem Leistungsversorgungsnetz 20 direkt verbunden, welches die elektrische Leistung für den Betrieb der Aktoren 16 zur Verfügung stellt.

Darüber hinaus ist jede Funktionseinheit 10 mit einem Bussystem 22 verbunden, welches eine Kommunikation zwischen den einzelnen Steuereinheiten 14 erlaubt.

Mit dem Bussystem 22 ist ferner noch eine Zentralstation 24 verbunden, deren Funktion nachfolgend noch im einzelnen erläutert wird.

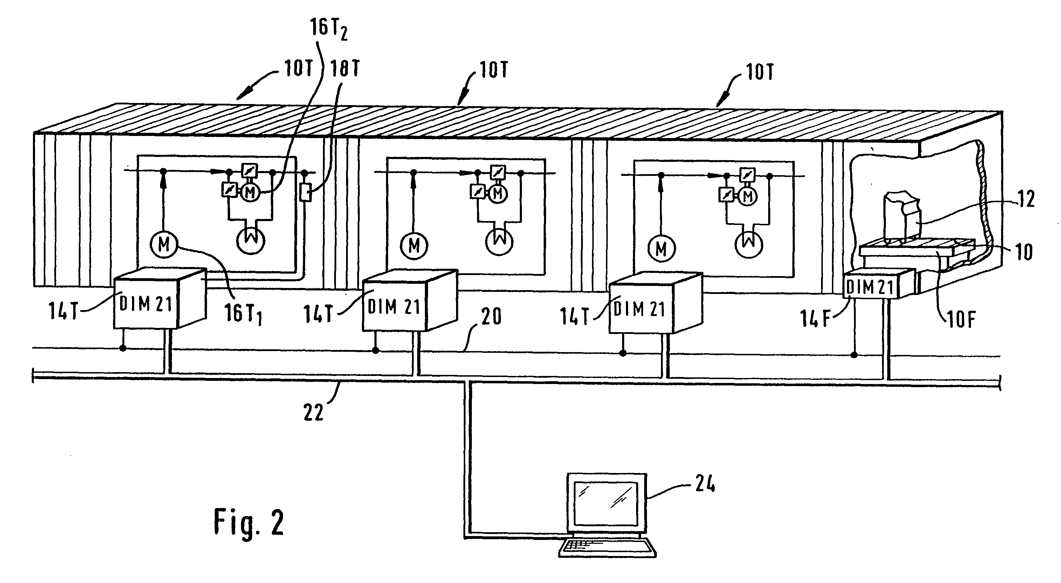

Bei einem zweiten Ausführungsbeispiel einer Fertigungsanlage, dargestellt in Fig. 2, sind die einzelnen Funktionseinheiten 10 nicht miteinander identisch, sondern stellen unterschiedliche Funktionseinheiten der Fertigungsanlage dar. So umfaßt die Fertigungsanlage beispielsweise Trocknereinheiten 10T von denen jede mit einer erfindungsgemäßen Steuereinheit 14T versehen ist, die in diesem Fall als ersten Aktor 16T₁ einen Gebläsemotor und als zweiten Aktor 16T₂ einen Stellmotor für Luftklappen ansteuert und dies aufgrund des Signals eines erfassenden Sensors 18T, der als Funktionsparameter die Temperatur erfaßt.

Um das Werkstück 12 durch die einzelnen Trocknereinheiten 10T zu transportieren, ist zusätzlich jeder Trocknereinheit 10T noch eine Fördereinheit 10F als Funktionseinheit zugeordnet, die ebenfalls über eine dieser jeweils lokal zugeordnete Steuereinheit 14F ansteuerbar ist, und zwar beispielsweise in der gleichen Weise, wie grundsätzlich im Zusammenhang mit dem ersten Ausführungsbeispiel gemäß Fig. 1 beschrieben.

Das heißt, daß bei dem zweiten Ausführungsbeispiel in jedem Abschnitt der Fertigungsanlage als selbständige Funktionseinheiten 10 nebeneinander sowohl eine Trocknereinheit 10T als auch eine Fördereinheit 10F angeordnet sind, wobei jede mit einer erfindungsgemäßen Steuereinheit 14T bzw. 14F ausgerüstet ist und alle miteinander über dasselbe Bussystem 22 kommunizieren und außerdem über dasselbe Leistungsversorgungsnetz 20 versorgt sind.

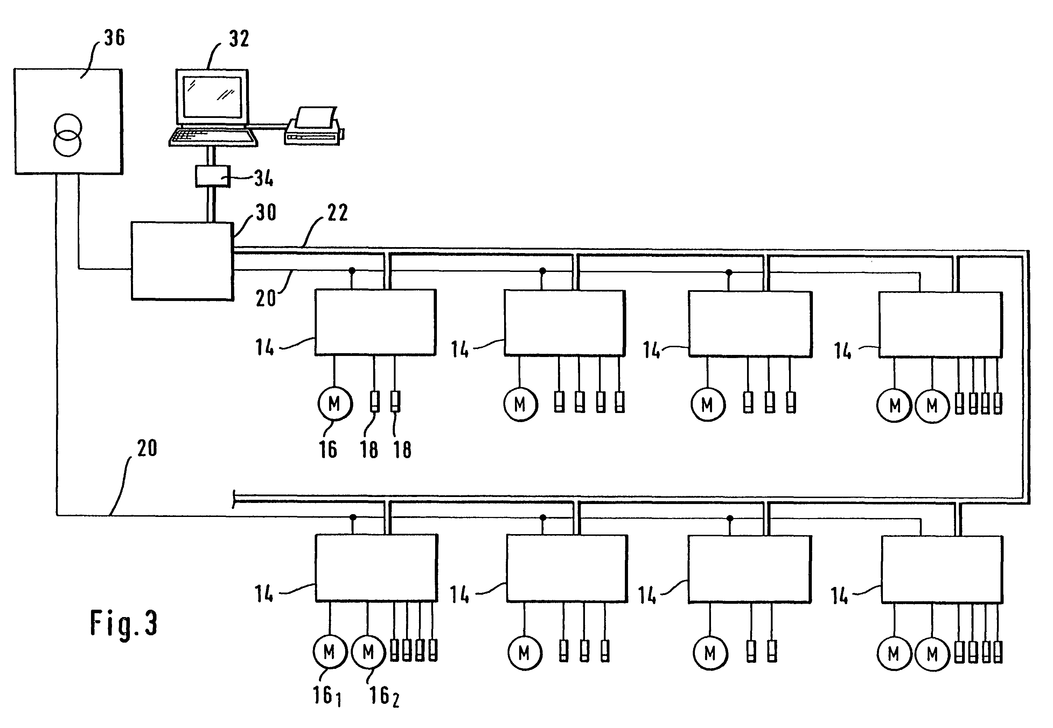

Das erfindungsgemäße Steuerungssystem mit der Verbindung aller selbständigen dezentralen Steuereinheiten 14, beispielsweise über ein LON Bussystem 22 ist nochmals in Fig. 3 verdeutlicht.

Am LON Bussystems 22 ist beispielsweise eine Mensch-Maschine-Schnittstelle 30 vorgesehen, welcher über das LON Bussystem 22 mit den einzelnen Steuereinheiten 14 kommuniziert.

Ferner ist auf das LON Bussystem 22 noch ein externer Zugriff, beispielsweise über einen externen Computer 32 mittels eines Adapters 34 möglich, wobei beispielsweise über diesen externen Computer 32 eine Kommunikation mit den einzelnen Steuereinheiten 14 möglich ist.

Wie bereits beschrieben, ist jeder dieser Steuereinheiten 14 einer oder mehrere Aktoren 16 und einer oder mehrere Sensoren 18 zugeordnet, um die entsprechende Funktionseinheit 10 anzusteuern.

Ferner ist jede Steuereinheit mit dem Leistungsversorgungsnetz 20 verbunden, welches seinerseits von einer zentralen Versorgungsstation 36 gespeist ist.

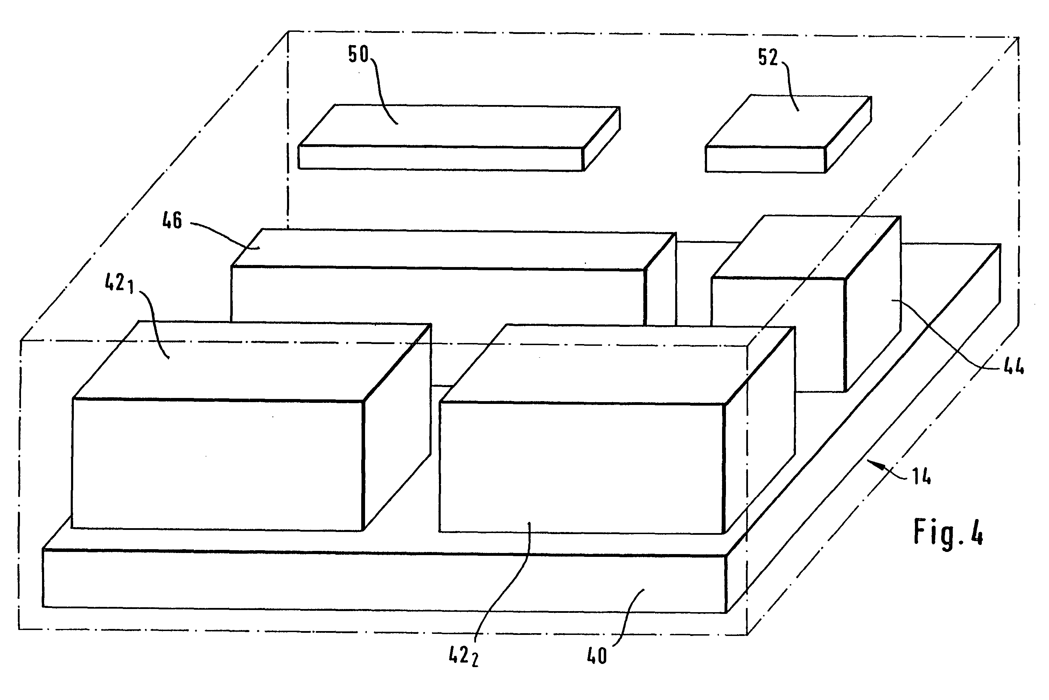

Wie in Fig. 4 dargestellt, ist jede der Steuereinheiten 14 modular aufgebaut, das Grundmodul jeder Steuereinheit ist ein Basismodul 40, mit welchem eine variable Zahl von Leistungsmodulen 42₁ und 42₂ verbunden ist.

Ferner ist mit dem Basismodul 40 ein Prozessormodul 44 und eine variable Zahl von Sensormodulen 46, entsprechend der Zahl der Sensoren verbunden.

Eine Anzeige der Funktion und Arbeitsweise der Steuereinheit 14 erfolgt über einen Anzeigemodul 50 und ferner ist über eine Eingabeeinheit 52 - beispielsweise ein Handterminal - ein BUS-externer Zugriff auf die Steuereinheit 14 möglich.

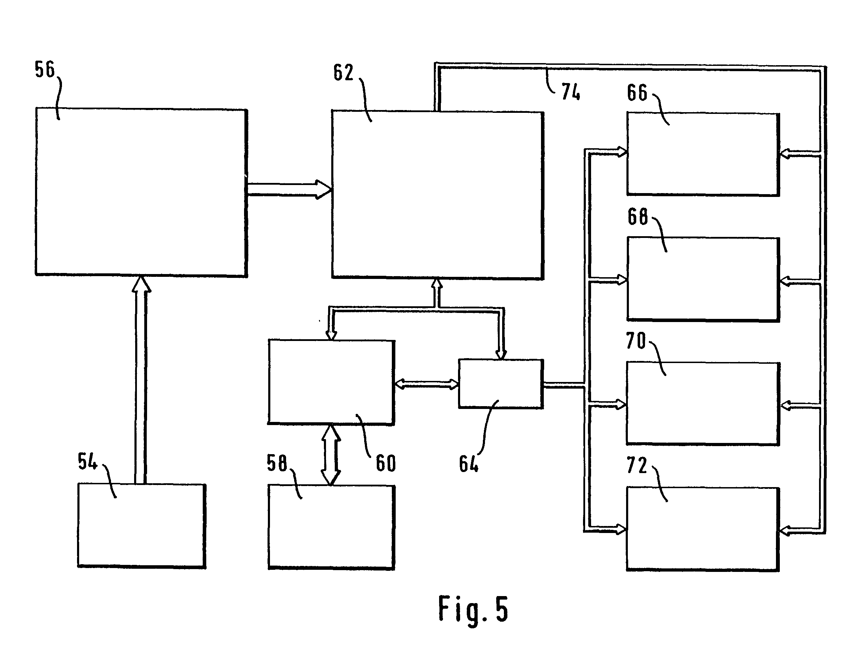

Wie in Fig. 5 dargestellt, ist das Basismodul 40 mit einem Anschluß 54 für das Leistungsversorgungsnetz 20 versehen, der mit einer Spannungsaufbereitungseinheit 56 verbunden ist.

Ferner ist das Basismodul 40 mit einem Anschluß 58 für das Bussystem 22 versehen, welcher mit einem Anschluß 60 für den Prozessormodul 44 verbunden ist.

Der Prozessormodul 44 ist außerdem noch mit einer Niederspannungsversorgung 62 verbunden, welche von der Spannungsaufbereitungseinheit 56 gespeist ist.

Die Niederspannungsversorgung 62 versorgt beispielsweise außerdem noch einen Buscontroller 64 eines internen Bussystems 74 der Steuereinheit 14, einen Anschluß 66 des Sensormoduls 46, einen Anschluß 68 des Anzeigemoduls 50, einen Anschluß 70 der Eingabeeinheit 52 und Anschlüsse 72 für die Leistungsmodule 42.

Ferner sind der Anschluß 60 des Prozessormoduls 44, der Anschluß 66 des Ein/Ausgabemoduls 48, der Anschluß 68 des Anzeigemoduls 50, der Anschluß 70 für die Eingabeeinheit 52 und die Anschlüsse 72 für die Leistungsmodule 42 mit dem Prozessormodul 44, beispielsweise über das interne Bussystem 74, verbunden, welches der internen Kommunikation der einzelnen Module der jeweiligen Steuereinheit 14 dient.

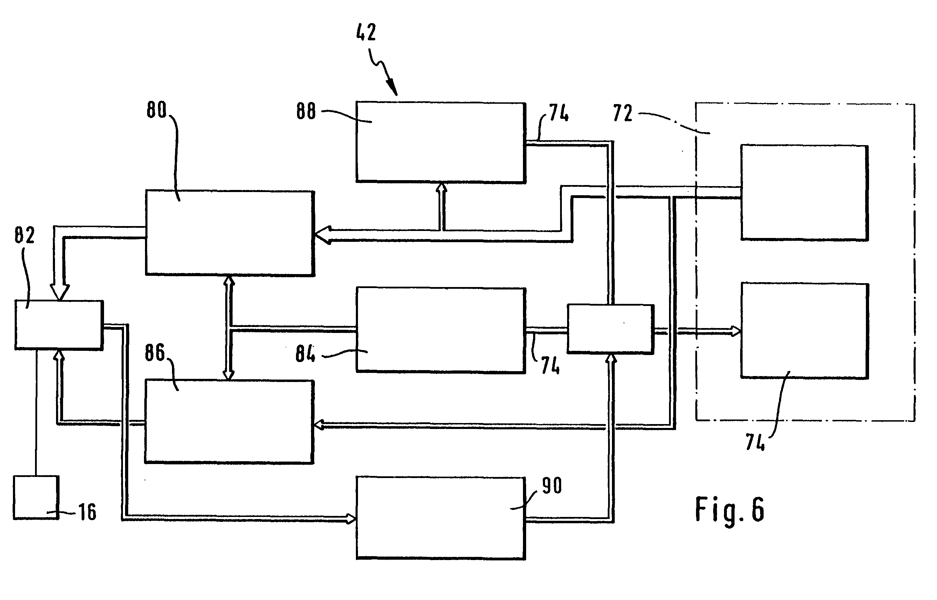

Jeder der Leistungsmodule 42 umfaßt seinerseits, wie in Fig. 6 dargestellt, eine Leistungselektronik 80, welche direkt mit dem Anschluß 72 verbunden ist und dadurch auch mit der entsprechenden elektrischen Leistung versorgt ist.

Die Leistungselektronik 80 ist ferner ihrerseits mit einem Anschluß 82 für den Aktor 16, beispielsweise einen Motor M, verbunden, in welchem diesem die erforderliche Energie zugeführt wird.

Die Leistungselektronik 80 wird angesteuert über eine Steuerschaltung 84, welche mit dem Prozessormodul 44, beispielsweise mittels des internen Bussystems 74, verbunden ist, wobei die Verbindung mit dem internen Bussystem 74 ebenfalls über den Anschluß 72 erfolgt. Die Steuerschaltung 84 steuert jedoch nicht nur die Leistungselektronik 80, sondern auch eine Versorgung 86 für ein dem Aktor 16 zugeordnetes Bremsrelais, wobei die Ansteuerung dieses Bremsrelais über den Motoranschluß 82 erfolgt.

Zusätzlich ist in jedem Leistungsmodul 42 eine Phasenüberwachung 88 vorgesehen, welche zur Überwachung der der Leistungselektronik 80 zugeführten elektrischen Energie dient. Die Phasenüberwachung 88 ist ebenfalls mit dem Prozessormodul 44, beispielsweise mittels des internen Bussystems 74, verbunden und übermittelt über dieses Phaseninformation beispielsweise der Steuerschaltung 84.

Ferner ist mit dem Motoranschluß 82 noch eine Motortemperaturüberwachung 90 verbunden, welche mit dem Prozessormodul 44, beispielsweise über das interne Bussystem 74, mit der Steuerschaltung 84 ebenfalls Information über die Motortemperatur austauscht.

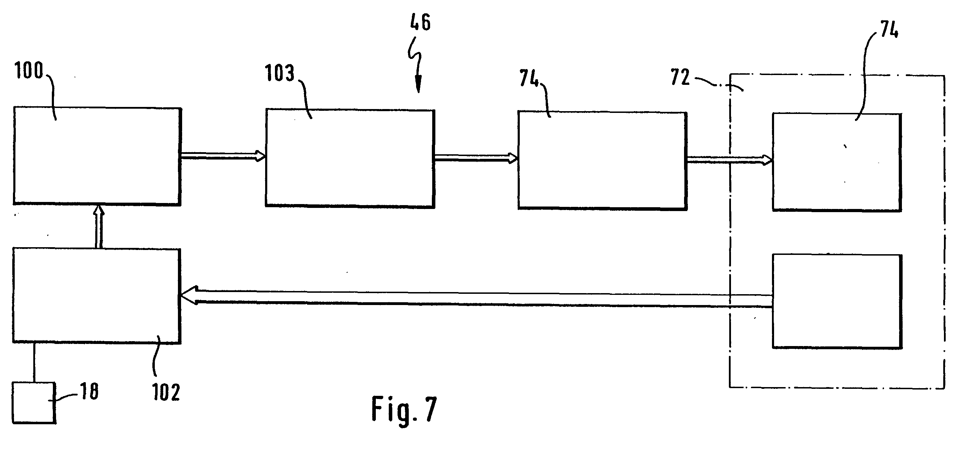

Jeder Sensormodul 46 umfaßt, wie in Fig. 7 dargestellt, ausgehend von dem für diesen vorgesehenen Anschluß 72 am Basismodul 40 eine Signalaufbereitungseinheit 100, welche über einen Sensoranschluß 102 mit dem jeweiligen Sensor 18 verbunden ist und dessen Signale entsprechend aufbereitet. Die Signalaufbereitungseinheit 100 gibt diese Signale über eine galvanische Trennung 103 an das interne Bussystem 74 ab, welches ebenfalls über den Anschluß 76 mit der Steuereinheit 46 verbunden ist.

Ferner ist über den Anschluß 72 eine direkte Versorgung des Sensoranschlusses 102 mit vom Basismodul 40 zur Verfügung gestellter Niederspannung vorgesehen.

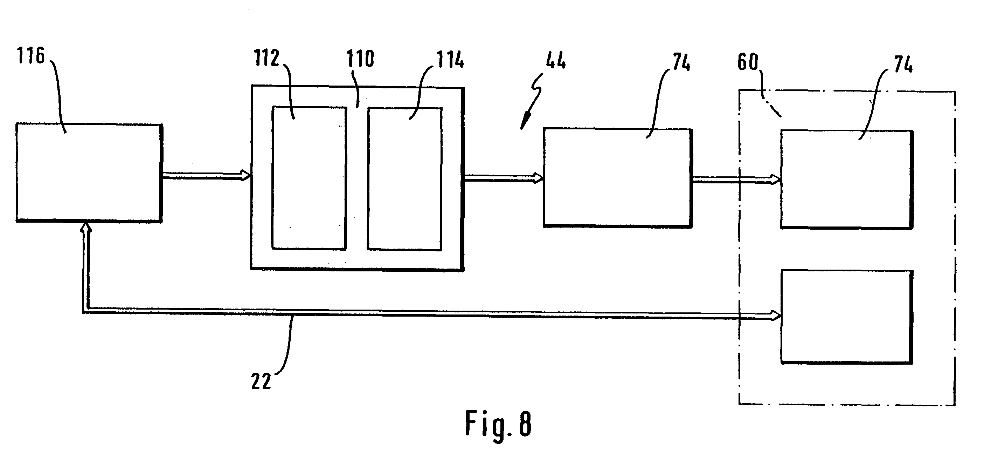

Wie in Fig. 8 dargestellt, umfaßt der Prozessormodul 44 eine über den Anschluß 60 hergestellte Verbindung mit dem übrigen Modulen, beispielsweise über das interne Bussystem 74 mit einer Prozessoreinheit 110, welche beispielsweise einen LON Prozessor umfaßt, welcher nicht nur einen Rechner 112 sondern auch einen ausreichend großen Steuerungsprogrammspeicher 114 aufweist.

Die Prozessoreinheit 110 kommuniziert dabei mit einer Sende-/Empfangseinheit 116 für das Bussystem 22, welche über den Anschluß 60 mit dem Bussystem 22 verbunden ist und über welche somit die Kommunikation mit dem Bussystem 22 erfolgt.

In dem Programmspeicher 114 ist ein Funktionssteuerprogramm niedergelegt, welches es erlaubt, sämtliche Funktionen der Funktionseinheit 10 zu steuern.

## Patentansprüche

1. Steuerungssystem für eine Fertigungsanlage, umfassend eine Vielzahl von mindestens eine Funktion realisierenden, in der Fertigungsanlage zusammenwirkenden Funktionseinheiten (10), von denen jede mindestens einen Aktor (16) und mindestens einen Sensor (18) zur Funktionssteuerung und/oder Funktionsüberwachung aufweist,
**dadurch gekennzeichnet, daß**
das Steuerungssystem dezentral aufgebaut ist und für jede Funktionseinheit (10) mindestens eine intelligente Steuereinheit (14) aufweist, welche die Funktionseinheit (10) durch direkte Kommunikation mit der Steuereinheit (14) mindestens einer anderen der Funktionseinheiten (10) zentralrechnerunabhängig und nach einem eigenen, in einem Programmspeicher (114) gespeicherten Funktionssteuerprogramm betreibt und entsprechend dem Funktionssteuerprogramm den mindestens einen Aktor (16) ansteuert und/oder Signale des mindestens einen Sensors (18) auswertet,
wobei jede Steuereinheit (14)
einen den mindestens einen Aktor (16) ansteuernden Leistungsmodul (42), der mit einem Anschluß (82) zum Zuführen der erforderlichen Energie zu dem Aktor (16) versehen ist,
einen den mindestens einen Sensor (18) betreibenden und dessen Signale empfangenden Sensormodul (46), der mit
einem Sensoranschluß (102) zum Versorgen des Sensors (18) mit Niederspannung versehen ist,
und ein Basismodul (40) umfaßt, das mit einem Anschluß (54) für ein Leistungsversorgungsnetz (20), welches zu der Steuereinheit (14) geführt ist, mit einem Anschluß (72) für das Leistungsmodul (42), durch welchen das Leistungsmodul (42) mit elektrischer Leistung versorgt ist, und mit einem Anschluß (72) für das Sensormodul (46), durch welchen der Sensoranschluß (102) mit Niederspannung versorgt ist, versehen ist.

2. Steuerungssystem nach Anspruch 1, **dadurch gekennzeichnet, daß** jede Steuereinheit (14) die gesamten vorgesehenen Funktionen mit dem Funktionssteuerprogramm eigenständig durchführt.

3. Steuerungssystem nach einem der voranstehenden Ansprüche, **dadurch gekennzeichnet, daß** jede Steuereinheit (14) alle für die Funktion der Funktionseinheit (10) notwendigen Funktionsparameter erfaßt und entsprechend diesen die Funktionseinheit (10) steuert.

4. Steuerungssystem nach einem der voranstehenden Ansprüche, **dadurch gekennzeichnet, daß** alle Steuereinheiten (14) der Fertigungsanlage an ein Bussystem (22) angeschlossen sind.

5. Steuerungssystem nach Anspruch 4, **dadurch gekennzeichnet, daß** jede Steuereinheit (14) in der Lage ist, über das Bussystem (22) Kommunikationssignale zu empfangen und auszusenden.

6. Steuerungssystem nach Anspruch 5, **dadurch gekennzeichnet, daß** jede Steuereinheit (14) über das Bussystem (22) programmierbar ist.

7. Steuerungssystem nach Anspruch 5 oder 6, **dadurch gekennzeichnet, daß** die Arbeitsweise jeder Steuereinheit (14) über das Bussystem (22) überprüfbar ist.

8. Steuerungssystem nach einem der Ansprüche 5 bis 7, **dadurch gekennzeichnet, daß** jede Steuereinheit (14) über das Bussystem (22) Fehlermeldungen abgibt.

9. Steuerungssystem nach einem der voranstehenden Ansprüche, **dadurch gekennzeichnet, daß** jeder Funktionseinheit (10) die Steuereinheit (14) lokal zugeordnet ist.

10. Steuerungssystem nach Anspruch 9, **dadurch gekennzeichnet, daß** der mindestens eine Aktor (16) und der mindestens eine Sensor (18) jeder Steuereinheit (14) mit der Funktionseinheit (10) direkt verdrahtet sind.

11. Steuerungssystem nach Anspruch 9 oder 10, **dadurch gekennzeichnet, daß** jede Steuereinheit (14) an der jeweiligen Funktionseinheit (10) unmittelbar angeordnet ist.

12. Steuerungssystem nach einem der Ansprüche 9 bis 11, **dadurch gekennzeichnet, daß** das Bussystem (22) zu jeder lokal der Funktionseinheit (10) zugeordneten Steuereinheit geführt ist.

13. Steuerungssystem nach einem der Ansprüche 1 bis 12, **dadurch gekennzeichnet, daß** jede Steuereinheit (14) einen zentralrechnerunabhängig und funktionsprogrammgesteuert arbeitenden intelligenten Prozessormodul (44) aufweist, wobei der Prozessormodul (44) eine Sende- und Empfangseinheit (116) aufweist, welche eine Verbindung zwischen einer Prozessoreinheit (110) des Prozessormoduls (44) und einem Bussystem (22) herstellt.

14. Steuerungssystem nach einem der Ansprüche 1 bis 13, **dadurch gekennzeichnet, daß** jede Steuereinheit (14) einen eine Funktionsanzeige betreibenden Anzeigemodul (50) aufweist.

15. Steuerungssystem nach einem der Ansprüche 1 bis 14, **dadurch gekennzeichnet, daß** jede Steuereinheit (14) einen eine Eingabeeinheit (52) betreibenden Ein-/Ausgabemodul (48) umfaßt.

16. Steuerungssystem nach Anspruch 15, **dadurch gekennzeichnet, daß** mit der Eingabeeinheit (52) im Normalbetrieb von anderen Steuereinheiten (14) für die jeweilige Steuereinheit (14) erzeugte Kommunikationssignale generierbar sind.

17. Steuerungssystem nach Anspruch 15 oder 16, **dadurch gekennzeichnet, daß** über die Eingabeeinheit (52) ein Störfallbetriebsmodus der Steuereinheit aktivierbar ist, in welchem der Leistungsmodul (42) direkt ansteuerbar ist.

18. Steuerungssystem nach einem der Ansprüche 15 bis 17, **dadurch gekennzeichnet, daß** die vom Sensor (18) erfaßten Funktionsparameter von der Eingabeeinheit (52) anzeigbar sind.

19. Steuerungssystem nach einem der voranstehenden Ansprüche, **dadurch gekennzeichnet, daß** jede Funktionseinheit (10) einen eigenen Funktionsabschnitt der Fertigungsanlage bildet.

20. Steuerungsverfahren zum Steuern einer Fertigungsanlage, umfassend eine Vielzahl von mindestens eine Funktion realisierenden, in der Fertigungsanlage zusammenwirkenden Funktionseinheiten (10), von denen jede mindestens einen Aktor (16) und mindestens einen Sensor (18) zur Funktionssteuerung und/oder Funktionsüberwachung aufweist,
**dadurch gekennzeichnet, daß**
die Funktionseinheiten (10) dezentral von einer Steuereinheit (14) gesteuert werden und daß von jeder Steuereinheit (14) die Funktionseinheit (10) durch direkte Kommunikation mit der Steuereinheit (14) mindestens einer anderen der Funktionseinheiten (10) zentralrechnerunabhängig und nach einem Funktionssteuerprogramm betrieben wird, wobei der Aktor (16) angesteuert und Signale des Sensors (18) ausgewertet werden,
daß der mindestens eine Aktor (16) von einem Leistungsmodul (42) der Steuereinheit (14) angesteuert wird und die erforderliche Energie dem Aktor (16) über einen Anschluß (82) des Leistungsmoduls (42) zugeführt wird,
daß der mindestens eine Sensor (18) von einem Sensormodul (46) der Steuereinheit (14) betrieben wird und der Sensor (18) über einen Sensoranschluß (102) des Sensormoduls (46) mit Niederspannung versorgt wird, und
daß ein Basismodul (40) der Steuereinheit (14) an ein Leistungsversorgungsnetz (20), welches zu der Steuereinheit (14) geführt ist, angeschlossen ist, das Leistungsmodul (42) über einen Anschluß (72) des Basismoduls (40) mit elektrischer Leistung versorgt wird und das Sensormodul (46) über einen Anschluß (72) des Basismoduls (40) mit Niederspannung versorgt wird.

21. Steuerungsverfahren nach Anspruch 20, **dadurch gekennzeichnet, daß** in jeder Steuereinheit (14) die gesamten vorgesehenen Funktionen eigenständig gesteuert werden.

22. Steuerungsverfahren nach einem der Ansprüche 20 oder 21, **dadurch gekennzeichnet, daß** von jeder Steuereinheit alle für die Funktion der Funktionseinheit notwendigen Funktionsparameter erfaßt werden und entsprechend diesen die Funktionseinheit gesteuert wird.

23. Steuerungsverfahren nach Anspruch 22, **dadurch gekennzeichnet, daß** von der Steuereinheit (14) ein Teil der Funktionsparameter durch direkte Kommunikation mit mindestens einer anderen der Steuereinheiten (14) der Fertigungsanlage erfaßt wird.

24. Steuerungsverfahren nach einem der Ansprüche 20 bis 23, **dadurch gekennzeichnet, daß** von allen Steuereinheiten (14) Informationen an ein Bussystem (22) abgegeben oder von einem Bussystem (22) empfangen werden.

25. Steuerungsverfahren nach Anspruch 24, **dadurch gekennzeichnet, daß** jede Steuereinheit (14) über das Bussystem (22) programmiert werden kann.

26. Steuerungsverfahren nach Anspruch 24 oder 25, **dadurch gekennzeichnet, daß** die Arbeitsweise jeder Steuereinheit (14) über das Bussystem (22) überprüft werden kann.

27. Steuerungsverfahren nach Anspruch 26, **dadurch gekennzeichnet, daß** von jeder Steuereinheit (14) über das Bussystem (22) Fehlermeldungen abgegeben werden.

## Claims

1. A control system for a manufacturing plant comprising a plurality of functional units (10) which implement at least one function and co-operate in the manufacturing plant and each one of which comprises at least one actuator (16) and at least one sensor (18) for controlling the function and/or monitoring the function,
**characterised in that**
the control system is constructed in a decentralised manner and comprises at least one intelligent control unit (14) for each functional unit (10), said intelligent control unit operating the functional unit (10) by a process of direct communication with the control unit (14) of at least one of the other functional units (10) independently of a central computer and in accord with a dedicated function control program stored in a program store (114), and, in correspondence with the function control program, controlling the at least one actuator (16) and/or evaluating the signals from the at least one sensor (18),
wherein each control unit (14) comprises
a power module (42) which controls the at least one actuator (16) and is provided with a connection (82) for the purposes of supplying the requisite energy to the actuator (16),
a sensor module (46) which drives the at least one sensor (18) and receives the signals therefrom and which is provided with a sensor connection (102) for the purposes of supplying the sensor (18) with a low tension voltage,
and a base module (40) which is provided with a connection (54) for a power supply network (20) which is extended to the control unit (14), with a connection (72) for the power module (42) via which the power module (42) is supplied with electrical power, and with a connection (72) for the sensor module (46) via which the sensor connection (102) is supplied with a low tension voltage.

2. A control system in accordance with Claim 1, **characterised in that** each control unit (14) carries out all of the envisaged functions independently using the function control program.

3. A control system in accordance with any of the preceding Claims, **characterised in that** each control unit (14) ascertains all of the functional parameters needed for the function performed by the functional unit (10) and controls the functional unit (10) in accordance therewith.

4. A control system in accordance with any of the preceding Claims, **characterised in that** all the control units (14) in the manufacturing plant are connected to a bus system (22).

5. A control system in accordance with Claim 4, **characterised in that** each of the control units (14) is capable of receiving and transmitting communication signals over the bus system (22).

6. A control system in accordance with Claim 5, **characterised in that** each control unit (14) is programmable over the bus system (22).

7. A control system in accordance with Claim 5 or 6, **characterised in that** the manner of operation of each control unit (14) is checkable over the bus system (22).

8. A control system in accordance with any of the Claims 5 to 7, **characterised in that** each control unit (14) emits error messages over the bus system (22).

9. A control system in accordance with any of the preceding Claims, **characterised in that** the control unit (14) is locally associated with each functional unit (10).

10. A control system in accordance with Claim 9, **characterised in that** the at least one actuator (16) and the at least one sensor (18) of each control unit (14) are wired directly to the functional unit (10).

11. A control system in accordance with Claim 9 or 10, **characterised in that** each control unit (14) is arranged directly on the respective functional unit (10).

12. A control system in accordance with any of the Claims 9 to 11, **characterised in that** the bus system (22) is extended to each control unit (14) that is locally associated with the functional unit (10).

13. A control system in accordance with any of the Claims 1 to 12, **characterised in that** each control unit (14) comprises an intelligent processor module (44) which operates independently of a central computer and is controlled by a functional program, wherein the processor module (44) comprises a transmitting and receiving unit (116) which produces a connection between a processor unit (110) of the processor module (44) and a bus system (22).

14. A control system in accordance with any of the Claims 1 to 13, **characterised in that** each control unit (14) comprises an indicator module (50) which drives a function indicator.

15. A control system in accordance with any of the Claims 1 to 14, **characterised in that** each control unit (14) comprises an input/output module (48) which drives an inputting unit (52).

16. A control system in accordance with Claim 15, **characterised in that** communication signals that are produced in normal operation by the other control units (14) for the relevant control unit (14) are generatable by the inputting unit (52).

17. A control system in accordance with Claim 15 or 16, **characterised in that** a breakdown mode of the control unit, wherein the power module (42) is directly controllable, is activatable by the inputting unit (52).

18. A control system in accordance with any of the Claims 15 to 17, **characterised in that** the functional parameters detected by the sensor (18) are displayable by the inputting unit (52).

19. A control system in accordance with any of the preceding Claims, **characterised in that** each functional unit (10) forms a separate functional section of the manufacturing plant.

20. A control process for controlling a manufacturing plant comprising a plurality of functional units (10) which implement at least one function and co-operate in the manufacturing plant and each one of which comprises at least one actuator (16) and at least one sensor (18) for controlling the function and/or monitoring the function,
**characterised in that**
the functional units (10) are controlled in decentralised manner by a control unit (14) and **in that** the functional unit (10) is operated by each control unit (14) by a process of direct communication with the control unit (14) of at least one of the other functional units (10) independently of a central computer and in accord with a function control program, whereby the actuator (16) is controlled and signals from the sensor (18) are evaluated,
**in that** the at least one actuator (16) is controlled by a power module (42) of the control unit (14) and the requisite energy is supplied to the actuator (16) via a connection (82) of the power module (42),
**in that** the at least one sensor (18) is driven by a sensor module (46) of the control unit (14) and the sensor (18) is supplied with a low tension voltage via a sensor connection (102) of the sensor module (46), and
**in that** a base module (40) of the control unit (14) is connected to a power supply network (20) which is extended to the control unit (14), the power module (42) is supplied with electrical power via a connection (72) of the base module (40), and the sensor module (46) is supplied with a low tension voltage via a connection (72) of the base module (40).

21. A control process in accordance with Claim 20, **characterised in that** all of the envisaged functions are controlled independently in each control unit (14).

22. A control process in accordance with either of Claims 20 or 21, **characterised in that** all of the functional parameters needed for the function performed by the functional unit are established by each control unit and the functional unit is controlled in accordance therewith.

23. A control process in accordance with Claim 22, **characterised in that** a proportion of the functional parameters is established by the control unit (14) by a process of direct communication with at least one of the other control units (14) in the manufacturing plant.

24. A control process in accordance with any of the Claims 20 to 23, **characterised in that** information is supplied to a bus system (22) or is received from a bus system (22) by all of the control units (14).

25. A control process in accordance with Claim 24, **characterised in that** each control unit (14) can be programmed over the bus system (22).

26. A control process in accordance with Claim 24 or 25, **characterised in that** the manner of operation of each control unit (14) can be checked over the bus system (22).

27. A control process in accordance with Claim 26, **characterised in that** error messages are transmitted over the bus system (22) by each control unit (14).

## Revendications

1. Système de commande pour une installation de fabrication, comprenant une multiplicité d'unités fonctionnelles (10) réalisant au moins une fonction et coopérant dans l'installation de fabrication et dont chacune comporte au moins un actionneur (16) et au moins un capteur (18) pour la commande d'une fonction et/ou le contrôle d'une fonction, **caractérisé en ce que** le système de commande est agencé d'une manière décentralisée et comporte pour chaque unité fonctionnelle (10) au moins une unité de commande intelligente (14), qui fait fonctionner l'unité fonctionnelle (10) au moyen d'une communication directe avec l'unité de commande (14) d'au moins une autre des unités fonctionnelles (10), indépendamment d'un ordinateur central et conformément à un programme de commande de fonction particulier mémorisé dans une mémoire de programme (114) et, conformément au programme de commande de fonction, commande le au moins un actionneur (16) et/ou évalue des signaux du au moins un capteur (18),
dans lequel chaque unité de commande (14) comporte
un module de puissance (42), qui commande le au moins un actionneur (16) et est équipé d'une borne (82) pour envoyer l'énergie requise à l'actionneur (16),
un module de détection (46), qui fait fonctionner le au moins un capteur (18) et reçoit les signaux de ce capteur et qui est équipé d'une borne (102) de capteur pour l'alimentation du capteur (18) avec une basse tension, et
un module de base (40), qui est équipé d'une borne (54) pour un réseau d'alimentation de puissance (20), qui est raccordé à l'unité de commande (14), d'une borne (72) pour le module de puissance (42), au moyen de laquelle le module de puissance (42) est alimenté avec une puissance électrique, et d'une borne (72) pour le module de capteur (46), au moyen de laquelle la borne (102) de capteur est alimentée par une basse tension.

2. Système de commande selon la revendication 1, **caractérisé en ce que** chaque unité de commande (14) exécute de façon indépendante l'ensemble des fonctions prévues avec le programme de commande de fonctions.

3. Système de commande selon l'une des revendications précédentes, **caractérisé en ce que** chaque unité de commande (14) détecte tous les paramètres de fonction nécessaires pour la fonction de l'unité fonctionnelle (10) et commande l'unité fonctionnelle (10) conformément à ces paramètres.

4. Système de commande selon l'une des revendications précédentes, **caractérisé en ce que** toutes les unités de commande (14) de l'installation de fabrication sont raccordées à un système de bus (22).

5. Système de commande selon la revendication 4, **caractérisé en ce que** chaque unité de commande (14) est à même de recevoir et d'émettre des signaux de communication par l'intermédiaire du système de bus (22).

6. Système de commande selon la revendication 5, **caractérisé en ce que** chaque unité de commande (14) est programmable par l'intermédiaire du système de bus (22).

7. Système de commande selon la revendication 5 ou 6, **caractérisé en ce que** le mode de fonctionnement de chaque unité de commande (14) peut être contrôlé par l'intermédiaire du système de bus (22).

8. Système de commande selon l'une des revendications 5 à 7, **caractérisé en ce que** chaque unité de commande (14) délivre des signalisations d'erreurs par l'intermédiaire du système de bus (22).

9. Système de commande selon l'une des revendications précédentes, **caractérisé en ce que** l'unité de commande (14) est associée localement à chaque unité fonctionnelle (10).

10. Système de commande selon la revendication 9, **caractérisé en ce que** le au moins un actionneur (16) et le au moins un capteur (18) d'une unité de commande (14) sont câblés directement avec l'unité fonctionnelle (10).

11. Système de commande selon la revendication 9 ou 10, **caractérisé en ce que** chaque unité de commande (14) est disposée directement sur l'unité fonctionnelle respective (10).

12. Système de commande selon l'une des revendications 9 à 11, **caractérisé en ce que** le système de bus (22) même à chaque unité de commande associée localement à l'unité fonctionnelle (10).

13. Système de commande selon l'une des revendications 1 à 12, **caractérisé en ce que** l'unité de commande (14) comporte un module de traitement de processeur intelligent (44), qui travaille indépendamment de l'ordinateur central et d'une manière commandée par un programme de fonction, le module de processeur (44) comportant une unité d'émission et de réception (116), qui établit une liaison entre une unité de processeur (110) du module de processeur (44) et un système de bus (22).

14. Système de commande selon l'une des revendications 1 à 13, **caractérisé en ce que** chaque unité de commande (14) possède un module d'affichage (50) qui fait fonctionner une unité d'affichage de fonction.

15. Système de commande selon l'une des revendications 1 à 14, **caractérisé en ce que** chaque unité de commande (14) comprend un module d'entrée/sortie (48), qui fait fonctionner une unité d'entrée (52).

16. Système de commande selon la revendication 15, **caractérisé en ce que** dans le fonctionnement normal, des signaux de communication produits par d'autres unités de commande (14) pour l'unité de commande respective (14) peuvent être générés avec l'unité d'entrée (52).

17. Système de commande selon la revendication 15 ou 16, **caractérisé en ce qu'**un mode de fonctionnement en cas de panne de l'unité de commande, dans lequel le module de puissance (42) peut être commandé directement, peut être activé par l'intermédiaire d'une unité d'entrée (52).

18. Système de commande selon les revendications 15 à 17, **caractérisé en ce que** les paramètres de fonctions détectés par le capteur (18) peuvent être affichés par l'unité d'entrée (52).

19. Système de commande selon l'une des revendications précédentes, **caractérisé en ce que** chaque unité fonctionnelle (10) forme une section propre de fonction de l'installation de fabrication.

20. Procédé de commande pour commander une installation de fabrication comprenant une multiplicité d'unités fonctionnelles (10) réalisant au moins une fonction et coopérant dans l'installation de fabrication et dont chacune comporte au moins un actionneur (16) et au moins un capteur (18) pour la commande d'une fonction et/ou le contrôle d'une fonction, **caractérisé en ce que** les unités fonctionnelles (10) sont commandées d'une manière décentralisée par l'unité de commande (14) et que chaque unité de commande (14) fait fonctionner l'unité fonctionnelle (10) au moyen d'une communication directe avec l'unité de commande (14) d'au moins une autre des unités fonctionnelles (10), et ce indépendamment d'un ordinateur central et conformément d'un programme de commande de fonction, l'actionneur (16) étant commandé et des signaux du capteur (18) étant évalués,
que le au moins un actionneur (16) est commandé par un module de puissance (42) de l'unité de commande (14) et que l'énergie nécessaire est envoyée à l'actionneur (16) par l'intermédiaire d'une borne (82) du module de puissance (42),
qu'un module de capteur (46) de l'unité de commande (14) fait fonctionner le au moins un capteur (18) et que le capteur (18) est alimenté avec une basse tension par l'intermédiaire d'une borne (102) de capteur du module de capteur (46), et
qu'un module de base (40) de l'unité de commande (14) est raccordé à un réseau d'alimentation en puissance (20), qui est raccordé à l'unité de commande (14), que le module de puissance (42) est alimenté avec une puissance électrique par l'intermédiaire d'une borne (72) du module de base (40) et que le module de capteur (46) est alimenté avec une basse tension par l'intermédiaire d'une borne (72) du module de base (40).

21. Procédé de commande selon la revendication 20, **caractérisé en ce que** l'ensemble des fonctions prévues sont commandées de façon autonome dans chaque unité de commande (14).

22. Procédé de commande selon l'une des revendications 20 ou 21, **caractérisé en ce que** tous les paramètres de fonction nécessaires pour la fonction de l'unité fonctionnelle sont détectés par chaque unité de commande et que l'unité fonctionnelle est commandée en fonction de ces paramètres.

23. Procédé de commande selon la revendication 22, **caractérisé en ce qu'**une partie des paramètres de fonction est détectée par l'unité de commande (14), au moyen d'une communication directe avec au moins une autre des unités de commande (14) de l'installation de fabrication.

24. Procédé de commande selon l'une des revendications 20 à 23, **caractérisé en ce que** des informations sont délivrées à un système de bus (22) par toutes les unités de commande ou sont reçues par un système de bus (22).

25. Procédé de commande selon la revendication 24, **caractérisé en ce que** chaque unité de commande (14) peut être programmée par l'intermédiaire du système de bus (22).

26. Procédé de commande selon la revendication 24 ou 25, **caractérisé en ce que** le mode de fonctionnement de chaque unité de commande (14) peut être contrôlé au moyen du système de bus (22).

27. Procédé de commande selon la revendication 26, **caractérisé en ce que** des signalisations d'erreurs sont délivrées par chaque unité de commande (14) par l'intermédiaire du système de bus (22).
